(19) Europäisches Patentamt
European Patent Office
Office européen des brevets

(11) Publication number: **0 412 787 A2**

# (12) EUROPEAN PATENT APPLICATION

(21) Application number: **90308706.2**

(51) Int. Cl.[5]: **C08L 71/12**, C08L 23/12

(22) Date of filing: **08.08.90**

(30) Priority: **09.08.89 JP 206022/89**

(43) Date of publication of application:
**13.02.91 Bulletin 91/07**

(84) Designated Contracting States:
**DE ES FR GB IT NL**

(71) Applicant: **SUMITOMO CHEMICAL COMPANY, LIMITED**
**5-33 Kitahama 4-chome Chuo-ku**
**Osaka-shi Osaka(JP)**

(72) Inventor: **Furuta, Motonobu**
**1-102, 2-13-1 Umezone**
**Tsukuba-shi, Ibaraki(JP)**
Inventor: **Imai, Akio**
**3-17-10 Aobadai**
**Ichihara-shi, Chiba(JP)**

(74) Representative: **Hutchins, Michael Richard et al**
**Graham Watt & Co. London Road Riverhead**
**Sevenoaks, Kent TN13 2BN(GB)**

## (54) Thermoplastic resin composition.

(57) Disclosed herein is a thermoplastic resin composition which contains:

(a) polyphenylene ether or a composition containing polyphenylene ether, and

(b)

(i) a modified propylene polymer formed by grafting a propylene polymer with a styrene-based monomer or a mixture of a styrene-based monomer and a monomer copolymerizable with the styrene-based monomer, or

(ii) a composition containing said modified propylene polymer and a propylene polymer, and

(c) a rubbery substance which has in its molecule chain-A miscible with all or part of said component (a) and also has chain-B miscible with all or part of said component (b), chain-A and chain-B differing from each other in principal structural unit.

This thermoplastic resin composition is superior in heat resistance, melt flow properties, processability, chemical resistance, impact resistance, appearance, and gloss.

EP 0 412 787 A2

# THERMOPLASTIC RESIN COMPOSITION

## BACKGROUND OF THE INVENTION

### *1. Field of the Invention*

The present invention relates to a novel thermoplastic resin composition which can be made into molded articles by injection molding, extrusion molding, or the like.

### *2. Related Art*

Polyphenylene ether is a resin which is generally superior in heat resistance, hot water resistance, dimensional stability, and mechanical and electrical properties. On the other hand, it suffers from the disadvantage of having poor moldability due to its high melt viscosity, low chemical resistance, and low impact resistance.

It is known that polyphenylene ether will have improved moldability without any adverse effect on its superior characteristics when it is decreased in melt viscosity by the incorporation of a polystyrene resin. However, the resulting composition is still poor in chemical resistance.

It is disclosed in US Patent No. 4189411 and UK Patent No. 1344729 that a polyphenylene ether resin compo sition will have improved processability when it is decreased in molding temperature and melt viscosity by the incorporation of a low-molecular weight hydrocarbon resin.

Also, Japanese Patent Laid-open No. 118956/1980 discloses the incorporation of a petroleum-derived low-molecular weight resin or rosin resin into a polyphenylene ether resin composition for the reduction of its melt viscosity.

Japanese Patent Publication No. 13584/1982 discloses a method of decreasing the melt viscosity of polyphenylene ether by incorporation with an aromatic hydrocarbon resin derived from cracked naphtha.

Although the above-cited inventions are intended to improve the flowability of polyphenylene ether resin compositions, they achieve their object only with a great sacrifice in heat resistance. Also, they were not able to improve the chemical resistance of polyphenylene ether resin compositions.

Meanwhile, propylene polymers have been in general use for the production of molded articles, film, and sheet on account of their outstanding moldability, toughness, water resistance, and chemical resistance, and their low price attributable to their low specific gravity.

Unfortunately, propylene polymers have shortcomings or room for improvement in heat resistance, stiffness, impact resistance, coatability, and adhesion properties. This prevents the development of their new applications. There is an urgent need for improvement particularly in heat resistance and impact resistance.

For this reason, there is a demand for a resin composition composed of polyphenylene ether and a propylene polymer which would exhibit the features of both (i.e., improved moldability and improved impact resistance). It will find use in new broad application areas.

In practice, however, no satisfactory resin compositions have been obtained from polyphenylene ether and polypropylene mixed together on account of their poor compatibility. It is only possible to obtain a resin composition which gives injection molded articles with phase separation between polyphenylene ether and polypropylene. This phase separation greatly deteriorates the appearance and mechanical properties of the molded articles.

The compatibility of polyphenylene ether with polypropylene may be improved by incorporating polyphenylene ether with a propylene polymer grafted with a styrene-based monomer, as disclosed in Japanese Patent Laid-open No. 75663/1974. This method, however, does not provide any composition which is superior in both heat resistance and impact resistance.

A resin composition having superior mechanical properties can be obtained by the incorporation of polyphenylene ether with a styrene-based monomer-grafted propylene polymer and a rubbery substance, as disclosed in Japanese Patent Laid-open No. 207349/1989. However, it gives injection molded products which are still too poor in mechanical properties (especially dart impact strength) to meet the market requirements.

In view of the foregoing, the present inventors carried out extensive studies to develop a technology effective for the improvement of the resin composition composed of polyphenylene ether, a propylene polymer, and a rubbery substance. As the result, it was found that a thermoplastic resin composition incorporated with a specific rubbery substance exhibits balanced mechanical properties and has a high dart impact strength. This finding led to the present invention.

## SUMMARY OF THE INVENTION

Accordingly, it is an object of the present invention to provide a thermoplastic resin composition which comprises:

(a) polyphenylene ether or a composition containing polyphenylene ether,

(b)

(i) a modified propylene polymer formed by grafting a propylene polymer with a styrene-based monomer or a mixture of a styrene-based monomer and a monomer copolymerizable with the styrene-based monomer, or

(ii) a composition containing said modified propylene polymer and a propylene polymer, and

(c) a rubbery substance which has in its molecule chain-A miscible with all or part of said component (a) and also has chain-B miscible with all or part of said component (b), chain-A and chain-B differing from each other in principal structural unit.

It is another object of the present invention to provide molded articles, especially automotive parts, made of the above-mentioned thermoplastic resin composition.

Particular and preferred aspects and embodiments of the invention are as set forth in the dependent claims appended hereto and as described hereinbelow.

## DETAILED DESCRIPTION OF THE INVENTION

The polyphenylene ether used as component (a) in the present invention is obtained by the oxidation polymerization of one or more than one phenol compound represented by the general formula below with oxygen or an oxygen-containing gas by the aid of an oxidative coupling catalyst.

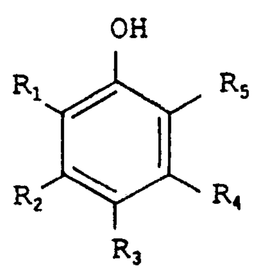

[I]

where $R_1$, $R_2$, $R_3$, $R_4$, and $R_5$ each independently denotes a hydrogen atom, halogen atom, hydrocarbon group or substituted hydrocarbon group, or hydrocarbyloxy group or substituted hydrocarbyloxy group, with at least one of $R_1$ to $R_5$ being invariably hydrogen.

Examples of $R_1$, $R_2$, $R_3$, $R_4$, and $R_5$ in the above formula include a hydrogen atom, chlorine atom, bromine atom, fluorine atom, iodine atom, methyl group, ethyl group, *n*- or isopropyl group, *pri*-, *sec*-, or *t*-butyl group, chloroethyl group, hydroxyethyl group, phenylethyl group, benzyl group, hydroxymethyl group, carboxyethyl group, methoxycarbonylethyl group, cyanoethyl group, phenyl group, chlorophenyl group, methylphenyl group, dimethylphenyl group, ethylphenyl group, and allyl group.

Examples of the phenol compound represented by the general formula above include phenol, *o*-, *m*-, and *p*-cresol, 2,6-, 2,5-, 2,4-, and 3,5-dimethylphenol, 2-methyl-6-phenylphenol, 2,6-diphenylphenol, 2,6-diethyl phenol, 2-methyl-6-ethylphenol, 2,3,5-, 2,3,6-, and 2,4,6-trimethylphenol, 3-methyl-6-*t*-butylphenol, thymol, and 2-methyl-6-allylphenol.

The polyphenylene ether may also be a copolymer of a phenol compound represented by the general formula above and a phenol compound other than that represented by the general formula above. Examples

of the latter include polyhydroxy aromatic compounds such as bisphenol-A, tetrabromobisphenol-A, resorcinol, hydroquinone, and novolak resin.

The preferred polyphenylene ether is a homopolymer of 2,6-dimethylphenol (2,6-xylenol) or 2,6-diphenylphenol, or a copolymer composed of 2,6-xylenol (in a large amount) and 3-methyl-6-*t*-butylphenol or 2,3,6-trimethylphenol (in a small amount).

The oxidative coupling catalyst used for the oxidation polymerization of the phenol compound is not specifically limited so long as it is capable of polymerization. Typical examples include a catalyst composed of a cuprous salt and a tertiary amine (such as cuprous chloride-triethylamine and cuprous chloride-pyridine), a catalyst composed of a cupric salt, amine, and alkali metal hydroxide (such as cupric chloride-pyridine-potassium hydroxide), a catalyst composed of a manganese salt and a primary amine (such as manganese chloride-ethanolamine and manganese acetate-ethylenediamine), a catalyst composed of a manganese salt and an alcoholate or phenolate (such as manganese chloride-sodium methylate and manganese chloride-sodium phenolate), and a catalyst composed of a cobalt salt and a tertiary amine.

It is known that polyphenylene ether differs in physical properties depending on whether it is produced by oxidation polymerization at a temperature higher than 40 °C or lower than 40 °C. Either high-temperature polymerization or low-temperature polymerization can be employed in the present invention.

The polyphenylene ether used in the present invention also includes modified products obtained by grafting the above-mentioned polymer or copolymer with other polymer. Examples of such modified products are listed below.

One is obtained by the oxidation polymerization of a phenol represented by the general formula below

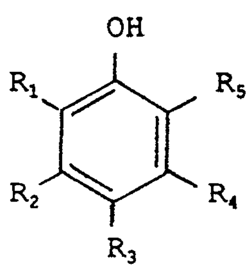

[I]

(wherein the symbols are defined as above.)
which is performed in the presence of an ethylene-propylene-polyene terpolymer. One is obtained by grafting a polyphenylene ether polymer or copolymer with styrene and/or other polymerizable monomer by the aid of an organic peroxide. (See Japanese Patent Publication Nos. 47862/1972, 12197/1973, 5623/1974, 38596/1977, and 30991/1977.) One is obtained by mixing the above-mentioned polyphenylene ether polymer or copolymer with a styrene-based polymer and a radical generator (e.g., peroxide) in an extruder. (See Japanese Patent Laid-open No. 142799/1977.)

Component (a) of the resin composition of the present invention may be a copolymer obtained by grafting polyphenylene ether with a styrene-based monomer represented by the general formula [II] below.

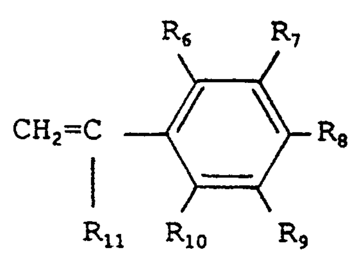

[II]

where $R_6$, $R_7$, $R_8$, $R_9$, and $R_{10}$ each independently denotes a hydrogen atom, halogen atom, hydrocarbon group or substi tuted hydrocarbon group, and hydrocarbyloxy group or substituted hydrocarbyloxy group; and $R_{11}$ denotes a hydrogen atom or a lower alkyl group having 1-4 carbon atoms.

Examples of $R_6$, $R_7$, $R_8$, $R_9$, and $R_{10}$ in the general formula [II] above include hydrogen atoms, halogen atoms (such as chlorine, bromine, and iodine), hydrocarbon groups (such as methyl, ethyl, propyl, vinyl, allyl, benzyl, and methylbenzyl), substituted hydrocarbon groups (such as chloromethyl and bromomethyl), and hydrocarbyloxy groups or substituted hydrocarbyloxy groups (such as methoxy, ethoxy, phenoxy, and

monochloromethoxy). Examples of $R_{11}$ include a hydrogen atom and lower alkyl group (such as methyl and ethyl).

Examples of the styrene-based monomer include styrene, 2,4-dichlorostyrene, *p*-methoxystyrene, *p*-methylstyrene, *p*-phenylstyrene, *p*-divinylbenzene, *p*-(chloromethoxy)-styrene, α-methylstyrene, *o*-methyl-α-methylstyrene, *m*-methyl-α-methylstyrene, *p*-methyl-α-methylstyrene, and *p*-methoxy-α-methylstyrene. They may be used alone or in combination with one another. Preferable among them is styrene.

The resin composition containing polyphenylene ether, which is defined as component (a) in the present inven tion, is a resin composition composed of the above-mentioned polyphenylene ether and an alkenyl aromatic resin and/or rubber-modified alkenyl aromatic resin.

The alkenyl aromatic resin is selected from among those which contain at least 25 wt% of the polymer unit derived from the styrene-based monomer represented by the general formula [II] above.

Examples of the alkenyl aromatic resin include polystyrene, polychlorostyrene, poly-α-methylstyrene, copolymers thereof, and styrene-containing copolymers (such as styrene-acrylonitrile copolymer, styrene-divinylbenzene copolymer, and styrene-acrylonitrile-α-methylstyrene copolymer). Preferable among them are homopolystyrene, styrene-α-methylstyrene copolymer, styrene-acrylonitrile copolymer, styrene-α-chlorostyrene copolymer, styrenemethyl methacrylate copolymer. Homopolystyrene is most desirable.

The rubber-modified alkenyl aromatic resin is a resin of two-phase system which is composed of an alkenyl aromatic resin as the matrix and rubber particles dispersed in the matrix. This resin can be produced by the mechanical mixing of an alkenyl aromatic resin with a rubbery substance mentioned later, or by the polymerization of an alkenyl aromatic monomer in which a rubbery substance has previously been dissolved. The latter process is used for the commercial production of so-called high-impact polystyrene. The one obtained by the latter process may be incorporated further with a rubbery substance and/or an alkenyl aromatic resin.

The polyphenylene ether and alkenyl aromatic resin and/or rubber-modified alkenyl aromatic resin may be mixed in a widely ranging ratio of 1-99 wt% to 99-1 wt%. An adequate ratio should be established according to the object and application.

The thermoplastic resin composition of the present invention contains component (b) which is (i) a modified propylene polymer formed by grafting a propylene polymer with a styrene-based monomer or a mixture of a styrene-based monomer and a monomer copolymerizable with the styrene-based monomer, or (ii) a composition containing said modified propylene polymer and a propylene polymer.

The modified propylene polymer is one which is formed by grafting 100 parts by weight of propylene polymer with 0.2-200 parts by weight, preferably 2-100 parts by weight, of a styrene-based monomer or a mixture of a styrene-based monomer and a monomer copolymerizable with the styrene-based monomer. With an amount less than 0.2 part by weight, the modified propylene polymer has no improved properties. With an amount in excess of 200 parts by weight, the modified propylene polymer is poor in chemical resistance.

The propylene polymer denotes a propylene homopolymer or a propylene copolymer which includes random or block copolymers consisting of propylene and ethylene and/or an α-olefin having 4-18 carbon atoms.

Examples of the propylene copolymer include ethylene-propylene copolymer, propylene-1-butene copolymer, propylene-1-hexene copolymer, propylene-4-methyl-1-pentene copolymer, and propylene-1-octene copolymer.

The propylene polymer may be a highly crystalline propylene polymer, if necessary. This polymer is characterized by that the moiety of propylene homopolymer, which is the first segment formed in the first step of polymerization for a propylene homopolymer or copolymer, contains boiling heptane insolubles whose isotactic pentad ratio is higher than 0.970. This polymer is also characterized in that the moiety of propylene homopolymer contains boiling heptane insolubles whose isotactic pentad ratio is higher than 0.970, and contains less than 5.0 wt% of boiling heptane solubles and less than 2.0 wt% of xylene (20°C) solubles.

The highly crystalline propylene polymer mentioned above can be produced by the processes disclosed in Japanese Patent Laid-open Nos. 28405/1985, 228504/1985, 218606/1986, and 287917/1986.

In the case where high stiffness is required, the propylene polymer should desirably be incorporated with a nucleating agent. Examples of the nucleating agent include an aluminum salt or sodium salt of an aromatic carboxylic acid (Japanese Patent Laid-open No. 80829/1983), an aromatic carboxylic acid, a metal salt of an aromatic phosphoric acid, and a sorbitol derivative (Japanese Patent Publication No. 12460/1980 and Japanese Patent Laid-open No. 129036/1983). The nucleating agent gives rise to the high crystallinity.

It is known that a vinylcycloalkane polymer having 6 or more carbon atoms also effectively functions as a nucleating agent. (Japanese Patent Laid-open No. 1738/1987). Thus, a propylene polymer composition

containing 0.05 to 10000 ppm (by weight) of vinylcycloalkane units exhibits a higher crystallinity.

In addition, the above-mentioned highly crystalline propylene polymer will give a highly stiff propylene polymer when incorporated with a vinylcycloalkane polymer mentioned above.

The propylene polymers (propylene homopolymer and propylene copolymer) may be used alone or in combination with one another.

According to the present invention, component (b) of the resin composition is prepared by grafting the above-mentioned propylene polymer with a styrene-based monomer which is represented by the general formula [II] above.

Examples of the styrene-based monomer include styrene, 2,4-dichlorostyrene, *p*-methoxystyrene, *p*-methylstyrene, *p*-phenylstyrene, *p*-divinylbenzene, *p*-(chloromethoxy)-styrene, α-methylstyrene, *o*-methyl-α-methylstyrene, *m*-methyl-α-methylstyrene, *p*-methyl-α-methylstyrene, and *p*-methoxy-α-methylstyrene. They may be used alone or in combination with one another. Preferable among them is styrene.

The above-mentioned styrene-based monomer is not the only grafting monomer to prepare the modified propylene polymer for component (b). It is also possible to use a mixture of the styrene-based monomer and a monomer copolymerizable with it. Such a mixture gives rise to a modified propylene polymer which contributes to the thermoplastic resin having improved mechanical properties.

Examples of the monomer copolymerizable with the styrene-based monomer include acrylonitrile, methacrylonitrile, fumaric acid, maleic acid, vinyl ketone, maleic anhydride, acrylic acid, methacrylic acid, vinylidene chloride, maleate ester, methyl methacrylate, ethyl methacrylate, propyl methacrylate, butyl methacrylate, methyl acrylate, ethyl acrylate, propyl acrylate, butyl acrylate, vinyl chloride, vinyl acetate, divinyl benzene, ethylene oxide, glycidyl acrylate, glycidyl methacrylate, vinylidene chloride, maleate ester, isobutene, alkyl vinyl ether, anethole, indene, coumarone, benzofuran, 1,2-dihydronaphthalene, acenaphthylene, isoprene, chloroprene, trioxane, 1,3-dioxolane, propylene oxide, β-propiolactone, vinyl biphenyl, 1,1-diphenylethylene, 1-vinylnaphthalene, 2-vinylnaphthalene, 2-vinylpyridine, 4-vinylpyridine, 2,3-dimethylbutadiene, ethylene, propylene, allyltrimethylsilane, 3-butenyltrimethylsilane, vinyl carbazole, N,N-diphenylacrylamide, and fumaronitrile. Derivatives of these monomers can also be used. They may be used alone or in combination with one another. Preferable among them are maleic anhydride, glycidyl methacrylate, and glycidyl acrylate.

The amount of the styrene-based monomer in the mixture of the styrene-based monomer and the monomer copolymerizable with the styrene-based monomer may vary in the range of 1 to 100 wt%, depending on the intended use of the resin composition.

The styrene-based monomer and the monomer copolymerizable with the styrene-based monomer may be grafted to a propylene polymer by any known method. For example, grafting may be accomplished by mixing a propylene polymer with a grafting monomer and a peroxide and melt-mixing the mixture in a melt-mixing apparatus; by dispersing a propylene polymer together with a grafting monomer into water, adding a peroxide to the dispersion, stirring the dispersion with heating under a nitrogen atmosphere, cooling the reaction system, and filtering out the reaction product, followed by washing and drying; or by exposing a propylene polymer to UV light, radiation, oxygen, or ozone in the presence of a grafting monomer.

Alternatively, grafting may also be accomplished in two stages. First, the styrene-based monomer and the monomer copolymerizable with the styrene-based monomer are polymerized or copolymerized individually by any known method. Secondly, the resulting polymer or copolymer is grafted to a propylene polymer.

For example, the grafting of a propylene polymer with a styrene-based monomer and an acrylate ester may be accomplished as follows: First, a copolymer is prepared from the styrene-based monomer and acrylate ester by anionic polymerization. Secondly, the copolymer is melt-mixed with a propylene polymer and a peroxide to give a modified propylene polymer. Alternatively, a propylene polymer may be copolymerized with a styrene-based monomer and glycidyl methacrylate by radical polymerization.

The peroxide used to prepare the modified propylene polymer is not specifically limited; it may be selected from the following organic peroxides.

2,2′-azobisisobutyronitrile,
2,2′-azobis(2,4,4-trimethylvaleronitrile),
methyl ethyl ketone peroxide,
cyclohexanone peroxide,
3,3,5-trimethylcyclohexanone peroxide,
2,2-bis(*t*-butylperoxy)butane,
*t*-butyl hydroperoxide,
cumene hydroperoxide,
diisopropylbenzene hydroperoxide,

2,5-dimethylhexane-2,5-dihydroperoxide,
di-*t*-butyl peroxide,
1,3-bis(*t*-butylperoxyisopropyl)benzene,
2,5-dimethyl-2,5-di(*t*-butylperoxy)hexane,
2,5-dimethyl-2,5-di(*t*-butylperoxy)hexyne-3,
lauroyl peroxide,
3,3,5-trimethylhexanoyl peroxide,
benzoyl peroxide,
*t*-butyl peracetate,
*t*-butylperoxy isobutyrate,
*t*-butylperoxy pivalate,
*t*-butylperoxy-2-ethylhexanoate,
*t*-butylperoxy-3,5,5-trimethylhexanoate,
*t*-butyl peroxylaurate,
*t*-butyl peroxybenzoate,
di-*t*-butyl peroxyisophthalate,
2,5-dimethyl-2,5-di(benzoylperoxy)hexane,
*t*-butyl peroxymaleic acid,
*t*-butyl peroxyisopropyl carbonate, and
polystyrene peroxide.

Component (b) in the resin composition of the present invention is a propylene polymer modified with the above-mentioned styrene-based monomer or a mixture of the styrene-based monomer and a monomer copolymerizable with the styrene-based monomer. If necessary, this modified propylene polymer may be used in combination with an ethylene-α-olefin copolymer modified with a styrene-based monomer and/or an unmodified propylene polymer or ethylene-α-olefin copolymer.

Examples of the unmodified propylene polymer include propylene homopolymer and propylene copolymers such as ethylene-propylene copolymer, propylene-1-butene copolymer, propylene-1-hexene copolymer, propylene-4-methyl-1 pentene copolymer, and propylene-1-octene copolymer, which were listed earlier to explain the modification with a styrene-based monomer.

As the α-olefin monomer constituting the ethylene-α-olefin copolymer may be cited α-olefins (excluding propylene) corresponding to the above-mentioned propylene copolymer.

The modified propylene polymer or ethylene-α-olefin copolymer to be used for component (b) should preferably be one which is derived from an unmodified polymer having a density of 0.82-0.92 g/cm$^3$.

The preferred amount for incorporation is 1-40 parts by weight for 100 parts by weight of the modified propylene polymer and/or propylene polymer in component (b).

The incorporation of these components improves the impact resistance of the resin composition.

Component (b) in the thermoplastic resin composition of the present invention may be incorporated with a variety of additives, according to need, during the compounding process or during the fabricating process. Examples of the additives include antioxidant, heat stabilizer, light stabilizer, antistatic agent, inorganic and organic colorants, corrosion inhibitor, crosslinking agent, blowing agent, slip agent, plasticizer, fluorescent agent, surface smoothing agent, and surface brightener.

According to the present invention, component (a) and component (b) in the resin composition may be mixed in a widely ranging ratio of 1-98 wt% to 99-2 wt%. With an amount of component (b) less than 2 wt%, the resin composition is not so improved in processability. With an amount of component (b) more than 99 wt%, the resin composition is poor in heat distortion temperature and thermal properties.

According to the present invention, component (c) in the thermoplastic resin composition is a rubbery substance which has in its molecule chain-A miscible with all or part of component (a) and also has chain-B miscible with all or part of component (b), chain-A and chain-B differing from each other in principal structural unit. The rubbery substance denotes a natural or synthetic polymeric material which is resilient at room temperature.

Component (c) is a rubbery substance because either or both of chain-A and chain-B exhibit the rubbery properties, or other moieties than chain-A and chain-B exhibit the rubbery properties.

Miscibility is a term to denote the extent of mixing of different resins. When miscible resins are mixed together, all or part of them dissolves in each other through the intermolecular force or chemical bond. It is known that the complete or partial miscibility can be experimentally confirmed by the change of melting point or glass transition point which results from the mixing with other resin components. In the case of a mixture which forms the sea-island structure, the improved miscibility makes the island phase finer.

No elucidation has been made for the mechanism which causes the resin composition to exhibit its

outstanding physical properties by the incorporation of components (c); however, it is considered that the rubbery substance as component (c) is distributed over the interface between component (a) and component (b) such that it improves the adhesion strength and absorbs the impact energy imposed on the composition.

Polyphenylene ether or a composition containing polyphenylene ether, which constitutes component (a), is miscible with, for example, a chain containing a styrene-based monomer as the structural unit.

Modified propylene polymer or a composition containing said modified propylene polymer and a propylene polymer, which constitutes component (b), is miscible with chain-B which contains, for example, ethyl, propyl, isopropyl, etc. as the structural unit. (Chain-B is different from chain-A in the principal structural unit.)

Chain-B includes any chains (which are different from chain-A in the principal structural unit) containing the same structural unit as that of the graft chain which is formed when the modified propylene polymer as component (b) is prepared by grafting a propylene polymer with a styrene-based monomer or a mixture of a styrene-based monomer and a monomer copolymerizable with the styrene-based monomer.

Examples of component (c) in the present invention include styrene-ethylene-propylene copolymer, styrene-propylene copolymer, styrene-isoprene copolymer, and hydrogenated products thereof.

Additional examples include modified products formed by grafting ethylene-propylene rubber, ethylene-propylene-nonconjugated diene copolymer, isoprene polymer, natural rubber, or the like with a styrene-based monomer or a mixture of a styrene-based monomer and a monomer copolymerizable with the styrene-based monomer. (The monomer copolymerizable with a styrene-based monomer is defined as above.) Further additional examples include modified products obtained by grafting with two or more kinds of these monomers.

The above-mentioned rubbery substances may be used individually or in combination with one another as component (c) in the present invention.

The rubbery substance as component (c) may be produced by any process (e.g., emulsion polymerization and solution polymerization) using any catalyst (e.g., peroxide, trialkyl aluminum, lithium halide, and nickel-based catalyst).

Moreover, the rubbery substance may have a varied ratio of microstructure (e.g., cis-structure, trans-structure, and vinyl group) and a varied range of average rubber particle diameter.

In addition, the rubbery substance as component (c) in the present invention may be a copolymer in the form of random copolymer, block copolymer, or graft copolymer.

Component (c) in the present invention should contain chain-A and chain-B, each consisting of 10-1500 monomer units, preferably 20-800 monomer units. With less than 10 monomer units, component (c) is less miscible with component (a) and/or component (b). With more than 1500 monomer units, the resin composition is poor in processability.

In addition, component (c) should have an entire chain length consisting of 40-3000 monomer units, preferably 50-2000 monomer units. With a chain longer than 3000 monomer units, the resin composition is extremely poor in processability. With a chain shorter than 40 monomer units, component (c) contains chain-A and chain-B whose respective distribution in component (a) and component (b) is unclear, with the result that the resin composition does not exhibit its intended characteristic properties.

The chain length mentioned above is defined as the number of structural units bonded in chain-A or chain-B contained in the rubbery substance as component (c). In other words, the length of chain-A or chain-B is measured by the carbon-carbon linkage as a unit which is contained in the unsaturated compound (e.g., styrene, methacrylate ester, ethylene, and propylene) constituting chain-A or chain-B. In the case where chain-B consists of conjugated diene compounds (such as butadiene and isoprene) or hydrogenated products thereof, the carbon-carbon linkage in them is also regarded as one unit for the sake of convenience. For example, cis-polybutadiene or trans-polybutadiene is regarded as having two carbon-carbon linkages per monomer.

The chain length can be calculated from the molecular weight of the chain (which is obtained by gel permeation chromatography (GPC)), the molecular weight of the monomer, and the type of the monomer linkage.

According to the present invention, the amount of component (c) should be 1-80 parts by weight for 100 parts by weight of the total amount of component (a) and component (b). With component (c) less than 1 part by weight, the resin composition is poor in impact strength, especially dart impact strength. Component (c) in excess of 80 parts by weight deteriorates the inherently good heat resistance of polyphenylene ether.

The resin composition of the present invention may be incorporated with a rubbery substance different from component (c), in order to meet the market requirements. Examples of such rubbery substance include butadiene polymer, butadiene-styrene copolymer (including random copolymer, block copolymer,

and graft copolymer), chlorobutadiene polymer, butadiene-acrylonitrile copolymer, isobutylene polymer, isobutylene-butadiene copolymer, isobutylene-isoprene copolymer, acrylic ester copolymer, ethylene-propylene copolymer, ethylene-butene copolymer, styrene-butylene copolymer, perfluororubber, fluororubber, chloroprene rubber, butyl rubber, silicone rubber, ethylene-propylene-nonconjugated diene copolymer, thiokol rubber, polysulfide rubber, polyurethane rubber, polyether rubber (such as polypropylene oxide), epichlorohydrin rubber, polyester elastomer, polyamide elastomer, and epoxy group-containing copolymer.

If necessary, the resin composition of the present invention may be incorporated with any known flow improver such as white oil, liquid paraffin, low-molecular weight hydrocarbon resin, and low-molecular weight polyolefin, and modified products thereof.

The thermoplastic resin composition of the present invention may contain, in addition to components (a), (b), and (c), other polymeric compounds such as polyolefins (such as polymethylpentene), homopolymers and copolymers of vinyl compounds (such as polyvinyl chloride, polymethyl methacrylate, polyvinyl acetate, polyvinyl pyridine, polyvinyl carbazole, polyacrylamide, polyacrylonitrile, ethylene-vinyl acetate copolymer, and alkenyl aromatic resins), polycarbonate, polysulfone, polyethylene terephthalate, polybutylene terephthalate, polyarylene ester (such as U-polymer made by Unitika Co., Ltd.), polyphenylene sulfide, polyamides (such as nylon 6, nylon 6,6, and nylon 12), and condensation polymers (such as polyacetal). Additional examples of the polymeric compounds include thermosetting resins such as silicone resin, fluorocarbon resin, polyimide, polyamideimide, phenolic resin, alkyd resin, unsaturated polyester resin, epoxy resin, and diallyl phthalate resin.

The thermoplastic resin composition of the present invention may also be incorporated with a reinforcing agent (such as glass fiber and carbon fiber), inorganic or organic filler (such as carbon black, silica, and $TiO_2$), plasticizer, stabilizer, flame retardant, dye, and pigment.

The reinforcing agent is added to improve the mechanical properties (such as flexural strength, flexural modulus, tensile strength, and tensile modulus) and thermal properties (such as heat distortion temperature) of the resin composition. Examples of the reinforcing agent include alumina fiber, carbon fiber, glass fiber, high-modulus polyamide fiber, high-modulus polyester fiber, silicon carbide fiber, and titanate whisker.

The reinforcing agent should be used in an amount enough to produce the reinforcing effect. Usually, the preferred amount is in the range of 5 to 100 parts by weight for 100 parts by weight of the resin composition.

The particularly preferred reinforcing filler is glass fiber filaments made of lime-aluminum borosilicate glass containing only a small amount of sodium (known as "Σ" glass). In the case where electric properties are not so important, glass fiber filaments made of low-sodium glass, known as "C" glass may also be useful. The filaments can be produced by the conventional process such as air blowing, flame blowing, and mechanical drawing. The filaments desirable for plastics reinforcement can be produced by mechanical drawing. The filaments made by this process have a diameter in the range of 2 to 20 $\mu$m. The filament diameter is not so critical in the present invention. The filament length and form are not so critical either. The glass filaments may be used in the form of roving, thread, rope, or mat. Glass filaments in the form of strand cut to 0.3-3 cm, preferably 0.6 cm and below, are convenient to use in the preparation of the resin composition of the present invention.

The flame retardant useful for the resin composition of the present invention includes a group of compounds known to those skilled in the art. Particularly important among them are those which contain a specific element such as bromine, chlorine, antimony, phosphorus, and nitrogen, which imparts flame retardance. Examples of the flame retardant include halogenated organic compounds, antimony oxide, a mixture of antimony oxide and halogenated organic compound, a mixture of antimony oxide and phosphorus compound, phosphorus (as a simple substance), phosphorus compounds, and a mixture of halogen-containing compound and phosphorus compound or a compound having the phosphorus-nitrogen bond. They may be used in combination with one another.

The flame retardant should be used in an amount enough to impart flame retardance to the resin composition, although the amount is not so critical. When used in an excessive amount, the flame retardant will deteriorate the physical properties of the resin composition, resulting in, for example, the lowering of the softening point. Therefore, the flame retardant should be used in an amount of 0.5-50 parts by weight, preferably 1-25 parts by weight, and more preferably 3-15 parts by weight, for 100 parts by weight of polyphenylene ether or the resin composition containing polyphenylene ether.

The halogen-containing compounds useful as flame retardants are represented by the general formula below.

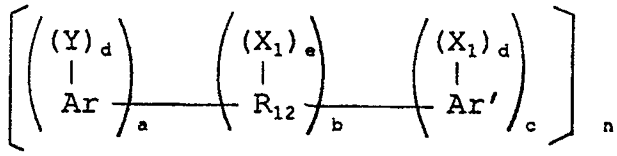

where n is 1 to 10; $R_{12}$ denotes a group selected from the group consisting of alkylene (such as methylene, ethylene, propylene, isopropylene, butylene, and isobutylene), alkylidene (such as isopropylidene and amylene), alicyclic linkage (such as cyclohexylene and cyclopentylidene), ether, carbonyl, amine, sulfur-containing linkage (such as sulfide, sulfoxide, and sulfone), carbonate, and phosphorus-containing linkage.

$R_{12}$ may also denote a group formed by the linkage of two or more alkylene or alkylidene groups through an aromatic, amino, ether, ester, carbonyl, sulfide, sulfoxide, sulfone, or phosphorus-containing group.

Ar and Ar′ each denotes a monocyclic or polycyclic carbocyclic aromatic group such as phenylene, biphenylene, terphenylene, and naphthylene. Ar and Ar′ may be the same or different.

Y denotes a substituent group selected from the group consisting of organic groups, inorganic groups, and organometallic groups. Examples of Y include (1) halogen (such as chlorine, bromine, iodine, and fluorine), (2) ether group represented by the general formula of -OE (where E denotes a monovalent hydrocarbon group as defined by $X_1$ below), (3) -OH group, (4) monovalent hydrocarbon group, and (5) other substituent groups (such as nitro group and cyano group). When d is 2 or above, the substituent groups represented by Y may be the same or different.

$X_1$ denotes a monovalent hydrocarbon group such as those listed below. Alkyl groups (such as methyl, ethyl, propyl, isopropyl, butyl, and decyl); aryl groups (such as phenyl, naphthyl, biphenyl, xylyl, and tolyl); aralkyl groups (such as benzyl and ethylphenyl); alicyclic groups (such as cyclopentyl and cyclohexyl); and monovalent hydrocarbon groups containing an inert substituent group. When there are two or more substituent groups represented by $X_1$, they may be the same or different.

The subscript d denotes an integer ranging from 1 to a number determined by the maximum number of substitutable hydrogen atoms on the aromatic ring represented by Ar or Ar′. The subscript e denotes 0 or an integer ranging from 1 to a number determined by the maximum number of substitutable hydrogen atoms on the group represented by $R_{12}$.

The subscripts a, b, and c each denotes an integer including 0. Unless b is 0, neither a nor c is 0; otherwise, either a or c may be 0. When b is 0, the aromatic groups are connected to each other directly through a carbon-carbon bond. The aromatic groups Ar and Ar′ may have hydroxyl groups or substituent groups Y at any of the ortho, meta, and para positions.

Examples of the compound represented by the general formula above include the following.

2,2-bis-(3,5-dichlorophenyl)-propane,
bis-(2-chlorophenyl)-methane,
1,2-bis-(2,6-dichlorophenyl)-ethane,
1,1,-bis-(4-iodophenyl)-ethane,
1,1-bis-(2-chloro-4-iodophenyl)-ethane,
1,1-bis-(2-chloro-4-methylphenyl)-ethane,
1,1-bis-(3,5-dichlorophenyl)-ethane,
2,2-bis-(3-phenyl-4-bromophenyl)-ethane,
2,3-bis-(4,6-dichloronaphthyl)-propane,
2,2-bis-(2,6-dichlorophenyl)-pentane,
2,2-bis-(3,5-dichlorophenyl)-hexane,
bis-(4-chlorophenyl)-phenylmethane,
bis-(3,5-dichlorophenyl)-cyclohexylmethane,
bis-(3-nitro-4-bromophenyl)-methane,
bis-(4-oxy-2,6-dichloro-3-methoxyphenyl)-methane,
2,2-bis-(3,5-dibromo-4-oxyphenyl)-propane,
2,2-bis-(3,5-dichloro-4-oxyphenyl)-propane, and
2,2-bis-(3-bromo-4-oxyphenyl)-propane.

Other examples include bis-aromatic compounds in which the two aliphatic groups in the above-mentioned compounds are replaced by sulfide groups or sulfoxy groups.

Additional examples include tetrabromobenzene, hexachlorobenzene, hexabromobenzene, 2,2′-dichlorobiphenyl, 2,4′-dibromobiphenyl, 2,4′-di-chlorobiphenyl, hexabromobiphenyl, octabromobiphenyl, decabromobiphenyl, halogenated diphenyl ether containing 2-10 halogen atoms, and oligomers having a degree of polymerization of 1 to 20 which are formed from 2,2-bis-(3,5-dibromo-4-oxyphenyl)-propane and phosgene.

The halogenated compound which is favorably used in the present invention includes aromatic halogenated compounds (such as chlorinated benzenes, brominated benzenes, chlorinated biphenyls, chlorinated terphenyls, brominated biphenyls, and brominated terphenyls); compounds containing two phenyl nuclei separated by a divalent alkylene group, each of said phenyl nuclei having at least two chlorine or bromine atoms; and mixtures thereof. Preferable among them are hexabromobenzene, chlorinated biphenyls or chlorinated terphenyls, and a mixture thereof with antimony oxide.

The typical phosphoric compound which is favorably used as a flame retardant in the present invention is one which is represented by the general formula below and a nitrogen analog thereof.

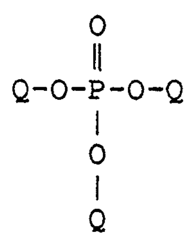

where Q denotes independently the same or different hydrocarbon group (such as alkyl, cycloalkyl, aryl, alkyl-substituted aryl, and aryl-substituted alkyl); halogen; hydrogen; or a combination thereof.

Adequate examples of the phosphoric ester include the following. Phenyl bisdodecyl phosphate, phenyl bisneopentyl phosphate, phenyl ethylene hydrogen phosphate, phenyl bis-(3,5,5'-trimethylhexyl) phosphate, ethyl diphenyl phosphate, 2-ethylhexyl di-(*p*-tolyl) phosphate, diphenyl hydrogen phosphate, bis-(2-ethylhexyl) *p*-tolyl phosphate, tritolyl phosphate, bis-(2-ethylhexyl) phenyl phos phate, tri(nonylphenyl) phosphate, phenyl methyl hydrogen phosphate, di(dodecyl) *p*-tolyl phosphate, triphenyl phosphate, halogenated triphenyl phosphate, dibutyl phenyl phosphate, 2-chloroethyl diphenyl phosphate, *p*-tolyl bis-(2,5,5'-trimethylhexyl) phosphate, 2-ethylhexyl diphenyl phosphate, and diphenyl hydrogen phosphate. Preferable among them is triphenyl phosphate. It is also desirable to use triphenyl phosphate in combination with hexabromobenzene or antimony oxide.

Other flame retardants that can be used in the present invention include compounds having the phosphorus-nitrogen bond, such as phosphorus nitride chloride, phosphoric ester amide, phosphoric acid amide, phosphine amide, tris(aziridinyl) phosphine oxide, and tetrakis-(hydroxymethyl) phosphonium chloride.

There are no restrictions on the process for producing the resin composition of the present invention, and any known process can be used. An effective process consists of dissolving the components in a solvent and recovering the mixed components from the solution by evaporation or precipitation in a non-solvent. In the commercial production, however, the mixing of the components is usually performed in the molten state. The melt-mixing can be carried out using an ordinary single-screw extruder, twin-screw extruder, or kneader. A twin-screw extruder of high shear type is preferable.

It is desirable to mix the components uniformly in the powder or pellet form using a tumbler or Henschel mixer, prior to melt-mixing. However, this preliminary mixing may be omitted; instead, the individual components may be directly metered into the mixing machine.

The thus obtained mixture of the components is ready for injection molding, extrusion molding, press molding, blow molding, etc. However, it is also possible to eliminate the mixing step. In this case, the individual components are dry-blended and the resulting dry blend is fed directly to a molding machine which melts and mix the components, yielding the desired moldings.

The sequence of mixing is not specifically limited. Thus it is possible to mix the components all at once. Alternatively, components (a) and (b) are mixed first and the mixture is mixed with component (c). Mixing in other sequence will be possible.

The thermoplastic resin composition of the present invention is superior in heat resistance, melt flow properties, processability, chemical resistance, impact resistance, appearance, and gloss. Owing to these characteristic properties, it can be made into molded articles, sheet, tubing, film, fiber, laminates, coating materials, and the like by injection molding, extrusion molding, press molding, and blow molding.

The molded articles will find use as automotive interior and exterior parts such as bumper, glove box, console box, brake oil tank, radiator grille, cooling fan, lamp housing, air cleaner, instrument panel, fender,

door trim, rear end trim, door panel, wheel cover, side protector, air intake, garnish, trunk lid, hood, sirocco fan, and roof. The molded articles will also find use as machine parts which need heat resistance. Other possible uses include motorcycle parts (such as covering material, muffler cover, and leg shield), electric and electronic parts (such as housing, chassis, connector, printed circuit board, and pulley), and other parts which all need strength and heat resistance.

## EXAMPLES

The invention will be described in more detail with reference to the following examples, which are illustrative only and are not intended to limit the scope of the invention.

In the examples, the heat distortion temperature (H.D.T.) was measured according to JIS K7207; the Izod impact strength (3.2 mm thick) was measured according to JIS K7110; the reduced viscosity ($\eta$ sp/C) of polyphenylene ether was measured on a chloroform solution (0.5 g/dl) at 25°C; and the melt flow index (MI) of propylene polymer was measured at 230°C under a load of 2.16 kg according to JIS K6758.

The mixing of components was carried out with a twin-screw extruder (Model TEX 44SS-30BW-2V, made by Japan Steel Works, Ltd.) at 260°C and a screw speed of 300 rpm.

The thus obtained resin composition was molded using an injection molding machine (Model IS 150E-V, made by Toshiba Machine Co., Ltd.) at a molding temperature of 260°C and a mold temperature of 70°C.

The dart impact strength was measured in the usual way by dropping a dart on an injection-molded test piece (measuring 120 × 90 × 3 mm) fixed to a support. (The dart is equipped with a stress detector.) The impact energy required for the test piece to be broken was obtained.

### Component (a): Polyphenylene ether

The following polyphenylene ether and polyphenylene ether composition were used in Examples and Comparative Examples.

(i) Polyphenylene ether ($\eta$ sp/C = 0.35) polymerized in the laboratory. (Designated as A-1 hereinafter.)

(ii) Polyphenylene ether ($\eta$ sp/C = 0.46) polymerized in the laboratory. (Designated as A-2 hereinafter.)

(iii) A polyphenylene ether composition formed from 100 parts by weight of polyphenylene ether (A-1), 14 parts by weight of styrene monomer, 2 parts by weight of dispersing agent ("Metholose 90SH-100"), peroxide ("Perbutyl PV"), and water, by graft copolymerization in an autoclave at 120°C for about 2 hours under a nitrogen stream, followed by cooling and recovery. This composition is designated as A-3 hereinafter.

### Component (b): Modified propylene polymer

(i) A styrene-grafted propylene polymer prepared by reacting 100 parts by weight of propylene polymer in pellet form ("Sumitomo Noblen AV564", MI = 30, made by Sumitomo Chemical Co., Ltd.) with 23 parts by weight of styrene monomer in an autoclave containing 300 parts by weight of water, 1 part by weight of dispersing agent ("Metholose 90SH-100"), and peroxide ("Perbutyl PV"), at 115°C for about 1 hour under a nitrogen stream, followed by cooling and recovery. This modified propylene polymer is designated as B-1 hereinafter.

(ii) A styrene- and glycidyl methacrylate-grafted propylene polymer prepared by reacting 100 parts by weight of propylene polymer ("Sumitomo Noblen AV664B", MI = 5, made by Sumitomo Chemical Co., Ltd.) with 42 parts by weight of styrene monomer, 6 parts by weight of glycidyl methacrylate, and 2 parts by weight of methyl methacrylate in an autoclave containing 4.0 parts by weight of calcium tertiary phosphate, 2.2 parts by weight of "Pluronick F-68" (made by Asahi Denka Kogyo Co., Ltd.), and "Sunperox TO" (made by Sanken Kako Co., Ltd.) as a radical initiator. The reaction was carried out at 110°C for 1 hour. After cooling, the desired product was recovered by filtration. This modified propylene polymer is designated as B-2 hereinafter.

(iii) A styrene-grafted polymer prepared by reacting 100 parts by weight of propylene polymer * (MI = 12) and 18 parts by weight of "Sumitomo Noblen S-131" (MI = 1.2, made by Sumitomo Chemical Co.,

* This propylene polymer was produced according to the procedure disclosed in Example 2 in Japanese Patent Laid-open No. 102907/1982.

Ltd.) with 120 parts by weight of styrene monomer in an autoclave containing 0.2 part by weight of dispersing agent ("Metholose 90SH-100"), peroxide ("Perbutyl PV"), and water under a nitrogen stream. The reaction was carried out at 110 °C for about 2 hours. After cooling, the desired product was recovered. This modified propylene polymer is designated as B-3 hereinafter.

Component (c): Rubbery substance

(i) A rubbery substance prepared as follows: First, a styrene polymer having a terminal norbornene nucleus was synthesized in the following manner.

In a glass reactor, with the atmosphere therein replaced with nitrogen gas, were placed 100 parts by weight of purified dry styrene, 500 parts by weight of completely purified, dry, deaerated benzene, and *n*-butyl lithium (as an initiator) in hexane solution in an amount of 10.0 mmol for 1 mol of styrene. Polymerization was carried out at 60 °C for 3 hours. There was obtained a red viscous polymer solution.

The polymer solution lost its red color within several minutes when given freshly distilled, completely purified 5-bromomethyl-2-norbornene in an amount of 12 mmol for 1 mol of styrene. This indicates that reaction took place between living polystyrene and 5-bromomethyl-2-norbornene.

To the polymer solution was added methanol, and then the polymer solution was discharged and poured into methanol for the recovery of reaction products. After vacuum drying, there was obtained a white powder in a yield of 99.5%.

It was found that this product has a number-average molecular weight of about 11,000 measured by osmometry. It was also found that this product has an extremely narrow molecular weight distribution measured by gel permeation chromatography (GPC), with the Q value (ratio of weight-average molecular weight to number-average molecular weight) being 1.09.

Calculations indicated that this product contains the styrene moieties in which the styrene chain length is 104. In addition, this product gave an iodine value of 3.0 measured by titration after dissolution in carbon tetrachloride. This suggests the presence of unsaturated bonds in the product.

Subsequently, the product (which is a styrene polymer having a terminal norbornene nucleus) was copolymerized with ethylene and propylene in the following manner.

In a glass reactor equipped with a cooling tube, stirrer, thermometer, gas bubbling tube, and dropping funnel were placed purified dry cyclohexane and polystyrene having a terminal norbornene nucleus. Ethylene and propylene were continuously admitted into the reactor at a ratio of 3:7 (by volume) until saturation was reached. The temperature in the reactor was controlled at 30 °C. With the introduction of ethylene and propylene continued, polymerization was started by charging the reactor with 44 mmol of ethyl aluminum sesquichloride and 4.6 mmol of vanadyl trichloride (per 100 g of the polystyrene having a terminal norbornene nucleus) simultaneously from individual dropping funnels with stirring. Polymerization was carried out for 15 minutes and then suspended by adding 3% methanol solution of 2,6-di-*t*-butyl-*p*-cresol. The reaction product was washed with methanol and separated from catalyst residues. The cyclohexane solution was poured into a large amount of methanol to separate the copolymer by precipitation. The precipitates were vacuum-dried at 40 °C. Thus there was obtained an elastomeric copolymer.

This copolymer was freed from the unreacted polystyrene having a terminal norbornene nucleus by dissolution in carbon tetrachloride and reprecipitation with acetone. The purified and recovered elastomeric copolymer was analyzed by infrared spectrometry. The ratio of intensity of absorption at 700 $cm^{-1}$ and 1460 $cm^{-1}$ indicated that the copolymer contains 16.2 wt% of polystyrene chain. Moreover, it was also found that the copolymer contains ethylene and propylene in a molar ratio of 52/48.

The result of GPC indicated that the copolymer has a monomodal molecular weight distribution, with the number-average molecular weight being 25,000 and the Q value being 2.20.

Calculations based on the number-average molecular weight indicated that the moiety of ethylene-propylene copolymer has 470 monomer units.

This polymer is designated as C-1 hereinafter.

(ii) A rubbery substance prepared as follows:

In a glass reactor, with the atmosphere therein replaced with nitrogen gas, were placed 100 parts by weight of purified dry styrene, 800 parts by weight of completely purified, dry, deaerated cyclohexane, and *n*-butyl lithium (as an initiator) in hexane solution in an amount of 2.1 mmol for 1 mol of styrene. Polymerization was carried out at 60 °C for 2 hours. There was obtained a red viscous polymer solution. A portion (about 1 ml) of the polymer solution was taken.

To the reactor was added 66 parts by weight of purified dry isoprene, and the reaction was continued at 60 °C for 2 hours. The polymer solution turned into a yellowish viscous solution. After 4 hours (in total) of polymerization reaction, the reactor was charged with 10 parts by weight of methanol containing 6 parts by

weight of 2,6-di-*t*-butyl-*p*-cresol dissolved therein, to suspend polymerization. The polymer solution was slowly added dropwise to a large amount of methanol. The resulting copolymer slurry was filtered out and washed with methanol three times, followed by vacuum drying at 40 °C.

This polymer was dissolved in toluene, and the solution was introduced into a stainless steel (SUS) autoclave equipped with a jacket and stirrer. The autoclave was evacuated (for deaeration) and pressurized (up to 5 $kg/cm^2G$) with hydrogen gas twice. To the reaction system were added 20 mmol of nickel-2-ethyl hexoate, 215 mmol of cyclohexene, and 645 mmol of triethyl aluminum for 100 parts by weight of the polymer. With the reaction system heated to 80 °C, hydrogen gas was admitted into the autoclave until the internal pressure reached 50 $kg/cm^2$. Reaction was carried out for 7 hours. The polymer solution was poured into hot water, followed by low-pressure steam evaporation for the removal of toluene. The resulting polymer slurry was filtered out, followed by drying at 80 °C for 48 hours in a forced-air circulation dryer.

The result of infrared spectrometry indicates that about 90% of the isoprene moiety of the polymer is hydrogenated. Also, the result of GPC indicates that the polymer has a narrow molecular weight, with the number-average molecular weight being about 100,000. It was also found that the styrene polymer sample taken in the course of the synthesis of styrene-isoprene block copolymer has a molecular weight of about 60,000. These data indicate that the polyethylene moiety has 577 styrene units and the hydrogenated polyisoprene moiety has 1176 isoprene units.

This polymer is designated as C-2 hereinafter.

(iii) A rubbery substance prepared as follows:

In an autoclave were placed 100 parts by weight of "Esprene E-316" in chopped form (made by Sumitomo Chemical Co., Ltd., EPDM having an $ML_{1+4}$ (121 °C) of 65 (as ethylene-α-olefin copolymer rubber), 25 parts by weight of calcium tertiary phosphate, 1.2 parts by weight of "Pluronick F-68" (made by Asahi Denka Kogyo Co., Ltd.), and water. The atmosphere in the autoclave was completely replaced with nitrogen gas with stirring

To the autoclave were added 32 parts by weight of styrene monomer and 0.23 part of "Sunperox TO" (made by Sanken Kako Co., Ltd.) as a radical initiator. The reaction was carried out at 115 °C for 1 hour. After cooling, the reaction product was filtered out to separate the styrene-grafted copolymer rubber, which was subsequently thoroughly washed with deionized water and vacuum-dried.

Calculations from the result of GPC indicate that the copolymer rubber has 82 styrene units.

This polymer is designated as C-3 hereinafter.

(iv) A rubbery substance prepared as follows:

In an autoclave were placed 100 parts by weight of "Esprene E-316" in chopped form (made by Sumitomo Chemical Co., Ltd., EPDM having an $ML_{1+4}$ (121 °C) of 65 (as ethylene-α-olefin copolymer rubber), 2 parts by weight of calcium tertiary phosphate, 1.2 parts by weight of "Pluronick F-68" (made by Asahi Denka Kogyo Co., Ltd.), and water. The atmosphere in the autoclave was completely replaced with nitrogen gas with stirring

To the autoclave were added 7 parts by weight of styrene monomer and 0.23 part of "Sunperox TO" (made by Sanken Kako Co., Ltd.) as a radical initiator. The reaction was carried out at 115 °C for 1 hour. After cooling the reaction product was filtered out to separate the styrene-grafted copolymer rubber, which was subsequently thoroughly washed with deionized water and vacuum-dried.

Calculations from the result of GPC indicate that the copolymer rubber has 6 styrene units.

This polymer is designated as C-4 hereinafter.

(v) A styrene-isoprene copolymer "Kraton G1701X" (made by Shell Chemical Co., Ltd.). Calculations from the result of GPC indicate that it has 420 styrene units.

This polymer is designated as C-5 hereinafter.

The above-mentioned components were compounded according to the formulations shown in Tables 1 and 2, and the compositions were injection-molded into test pieces for the measurement of physical properties.

It is noted from Tables 1 and 2 that the thermoplastic resin compositions pertaining to the present invention exhibit outstanding heat resistance, impact resistance, and dart impact strength.

Table 1

| Example No. (Comparative Example No.) | Composition (parts by weight) | | | | | Physical properties | | | |
|---|---|---|---|---|---|---|---|---|---|
| | Component (a) | Component (b) | | Component (c) | Others | | Izod impact strength | | |
| | | Modified propylene polymer | Propylene polymer | | | Heat distortion temperature (4.6 kg, ° C) | kg•cm/cm -30 ° C | kg•cm/cm 23 ° C | Dart impact strength (kg•cm, 23 ° C) |
| 1 | A-1 (26) | B-1 (63) | 0 | C-1 (7) | 4 *1 | 129 | 14 | 27 | 125 |
| (1) | A-1 (26) | B-1 (63) | 0 | 0 | 11 *1 | 130 | 8 | 16 | 82 |
| (2) | A-1 (26) | 0 | 63 *2 | C-1 (7) | 4 *1 | 103 | 5 | 9 | 32 |
| (3) | A-1 (26) | B-1 (63) | 0 | C-4 (7) | 4 *1 | 120 | 7 | 15 | 63 |
| 2 | A-2 (12) | B-2 | 0 | C-3 | 0 | 117 | 10 | 23 | 92 |
| | 23 *3 | (53) | | (11) | | | | | |
| (4) | A-2 (12) | B-2 | 0 | 0 | 6 *4 | 115 | 8 | 15 | 52 |
| | 23 *3 | (53) | | | 5 *5 | | | | |

Note to Table 1

*1 Ethylene-propylene rubber, "Sumitomo Esprene E201", [made by Sumitomo Chemical Co., Ltd., $ML_{1+4}$ 121 °C = 44]
*2 Propylene polymer, "Sumitomo Noblen AZ564", [made by Sumitomo Chemical Co., Ltd., MI = 30]
*3 Polystyrene, "Esbrite FA301", [made by Sumitomo Chemical Co., Ltd.]
*4 Styrene-butadiene block copolymer, "Kraton D1300X", [made by Shell Chemical Co., Ltd.]
*5 Styrene-butadiene rubber, "Sumitomo SBR1500", [made by Sumitomo Chemical Co., Ltd., $ML_{1+4}$ 100 °C = 52]

Table 2

| Example No. (Comparative Example No.) | Composition (wt%): Component (a) | Composition (wt%): Component (b): Modified propylene polymer | Composition (wt%): Component (b): Propylene polymer | Composition (wt%): Component (c) | Composition (wt%): Others | Physical properties: Heat distortion temperature (4.6 kg, °C) | Physical properties: Izod impact strength: kg•cm/cm -30°C | Physical properties: Izod impact strength: kg•cm/cm 23°C | Physical properties: Dart impact strength (kg•cm, 23°C) |
|---|---|---|---|---|---|---|---|---|---|
| 3 | A-3 (35) | B-3 (51) | 0 | C-3 (14) | 0 | 131 | 12 | 28 | 142 |
| (5) | A-3 (35) | B-3 (51) | 0 | C-4 (14) | 0 | 129 | 7 | 13 | 77 |
| 4 | A-1 (40) | B-2 (43) | 9 *1 | C-5 (6) | 2 *2 | 141 | 13 | 23 | 134 |
| 5 | A-1 (29) | B-3 (57) | 0 | C-1 (7)<br>C-5 (3) | 4 *3 | 132 | 10 | 19 | 105 |
| (6) | B-3 (57) | B-3 (57) | 0 | 0 | 4 *3<br>6 *4<br>4 *5 | 130 | 8 | 17 | 36 |

Note to Table 2

*1 Propylene polymer, "Sumitomo Noblen AX961", [made by Sumitomo Chemical Co., Ltd., MI = 50]
*2 Natural rubber
*3 Talc (average particle diameter = 5.2 μm)
*4 Styrene-butadiene block copolymer, "TR-2000", [made by Japan Synthetic Rubber Co., Ltd.]
*5 Butyl rubber, "Exxon Butyl 077", [made by Exxon Chemical Co., Ltd., $ML_{1+3}$ 127°C = 46]

## Claims

1. A thermoplastic resin composition which comprises:
(a) polyphenylene ether or a composition containing polyphenylene ether,
(b)
(i) a modified propylene polymer formed by grafting a propylene polymer with a styrene-based monomer or a mixture of a styrene-based monomer and a monomer ccpolymerizable with the styrene-based monomer, or
(ii) a composition containing said modified propylene polymer and a propylene polymer, and
(c) a rubbery substance which has in its molecule chain-A miscible with all or part of said component (a) and also has chain-B miscible with all or part of said component (b), chain-A and chain-B differing from each other in principal structural unit.

2. A thermoplastic, resin composition as claimed in Claim 1, wherein the ratio of component (a) to component (b) is 1-98 wt% to 99-2. wt%, and the amount of component (c) is 1-80 parts by weight for 100 parts by weight of the total amount of components (a) and (b).

3. A thermoplastic resin composition as claimed in Claim 1, wherein the propylene polymer in component (b) is highly crystalline polypropylene which contains boiling heptane insolubles whose isotactic pentad ratio is higher than 0.970.

4. A thermoplastic resin composition as claimed in Claim 1, wherein the propylene polymer in component (b) is highly crystalline polypropylene which contains boiling heptane insolubles whose isotactic pentad ratio is higher than 0.970, and also contains less than 5.0 wt% of boiling heptane solubles and less than 2.0 wt% of xylene (20°C) solubles.

5. A thermoplastic resin composition as claimed in Claim 1, wherein the propylene polymer composition in component (b) is one which is obtained by blending propylene polymer with a vinyl cycloalkane polymer having 6 or more carbon atoms and said composition contains 0.05 to 10000 ppm (by weight) of vinyl cycloalkane units.

6. A thermoplastic resin composition as claimed in Claim 1, wherein chain-A and chain-B in component (c) have the chain length of 10 to 1500 in terms of the respective monomer units.

7. A thermoplastic resin composition as claimed in Claim 6, wherein the total of monomer units in chain-A and chain-B in component (c) is 40 to 3000.

8. A thermoplastic resin composition as claimed in Claim 1, wherein component (c) contains chain-A miscible with the polyphenylene ether or polyphenylene ether-containing composition in component (a), said chain-A containing styrene-based monomers in the structural unit.

9. A thermoplastic resin composition as claimed in Claim 1, wherein component (c) contains chain-B miscible with the modified propylene polymer or the composition containing the modified propylene polymer and a propylene polymer in component (b), chain-B differing from chain-A in the principal structural unit, and chain-B containing an ethyl group, propyl group, isopropyl group, and like in the structural unit.

10. A thermoplastic resin composition as claimed in Claim 1, wherein component (c) is a rubbery substance selected from the group consisting of styrene-ethylene-propylene copolymer, styrene-butylene copolymer, styrene-butadiene copolymer and hydrogenated product thereof, and styrene-isoprene copolymer and hydrogenated products thereof.

11. A thermoplastic resin composition as claimed in Claim 1, wherein component (c) is a rubbery substance modified by graft copolymerization with a styrene-based monomer or a mixture of a styrene-based polymer and a monomer copolymerizable therewith, said rubbery substance being selected from the group consisting of ethylene-propylene rubber, ethylene-propylene-nonconjugated diene copolymer, ethylene-butene copolymer, isoprene polymer, and natural rubber.

12. Molded articles made of the thermoplastic resin composition as claimed in Claim 1.
13. Automotive parts made of the thermoplastic resin composition as claimed in Claim 1.
14. Automotive parts as claimed in Claim 13 which include bumper, glove box, console box, brake oil tank, radiator grille, cooling fan, lamp housing, air cleaner, instrument panel, fender, door trim, rear end trim, door panel, wheel cover, side protector, air intake, garnish, trunk lid, hood, sirocco fan, and roof.